# DEMANDE DE BREVET EUROPEEN

(11) **EP 0 694 324 A1**
(43) Date de publication de la demande: **31.01.1996**
(21) Numéro de dépôt: 95420204.0
(22) Date de dépôt: 18.07.1995
(51) Int. Cl.: B01D 1/00, B01D 3/34, D06F 75/14

(54) **Comprime de vaporisation**

(30) Priorité: 29.07.1994 FR 9409669
(71) Demandeur: SEB S.A., F-69130 Ecully (FR)
(72) Inventeur: Monnet, Louis, F-38150 Assieu (FR); Brandolini, Jean-Louis, F-42100 Saint-Etienne (FR)

(57) **Abrégé**

- L'invention concerne un produit actif pour faciliter la vaporisation d'un liquide dans une chambre de vaporisation (3), ledit produit étant composé d'un agent tensioactif apte à passer en solution dans le liquide destiné à être vaporisé, de manière à réduire sa tension de surface et à améliorer son pouvoir mouillant, au moins lors de la première vaporisation, ledit produit actif étant sous forme solide et associé à un agent effervescent permettant de diffuser ledit agent tensioactif, lorsque le liquide de vaporisation entre en contact avec le produit actif

## Description

La présente invention se rapporte au domaine des appareils destinés à produire de la vapeur.

L'invention concerne plus particulièrement l'association d'un appareil du type générateur de vapeur ou fer à repasser à vapeur et d'un produit actif facilitant la vaporisation d'un liquide destiné à être vaporisé.

Il est déjà connu d'utiliser un produit actif sous forme liquide en tant que produit de rodage pour fer à repasser à vapeur. Afin de préserver dans le temps l'efficacité du principe actif, celui-ci ne doit pas être introduit sous sa forme liquide, dans la chambre de vaporisation au moment de la fabrication du fer, mais plutôt au moment de son utilisation. Ainsi le produit de rodage est introduit dans le réservoir du fer par l'utilisateur avant la première utilisation. La dilution du produit actif dans le liquide de vaporisation permet d'augmenter le pouvoir mouillant dudit liquide pour éviter notamment un éventuel phénomène de caléfaction. Etant donné que les performances des fers à vapeur actuels impliquent d'importants débits de vapeur devant être produits quasi-instantanément, toute cause empêchant la vaporisation immédiate, et notamment la caléfaction, constitue un inconvénient important. Ce problème de caléfaction peut provenir d'un défaut de la surface de vaporisation provoqué lors de l'assemblage du fer ou d'une inégalité de l'épaisseur du revêtement de vaporisation à l'intérieur de la chambre de vaporisation.
Les produits de rodage liquides présentent un certain nombre d'inconvénients liés notamment à leur état liquide ; ils doivent en outre être conservés dans un contenant spécifique et hermétique. Par ailleurs l'utilisation d'un tel type de produit de rodage impose à l'utilisateur des manipulations supplémentaires contraignantes et délicates. Il est donc important pour les fabricants de fers à repasser à vapeur d'obtenir un moyen simple, peu coûteux et ne nécessitant peu ou pas de manipulation pour l'utilisateur, pour faciliter la vaporisation de façon à ce que celle-ci se produise le plus rapidement possible une fois que le liquide se trouve dans la chambre de vaporisation.

L'objet de la présente invention vise à fournir un produit actif facilement utilisable, manipulable et destiné à améliorer la vaporisation d'un liquide dans une chambre de vaporisation et plus particulièrement à éviter le phénomène de caléfaction.

Un autre objet de la présente invention vise à utiliser un produit actif permettant de pallier aux éventuels défauts des revêtements de vaporisation dans les chambres de vaporisation.

Un objet supplémentaire de la présente invention vise à utiliser un produit actif pouvant être introduit dans le circuit d'écoulement de la chambre de vaporisation ou directement dans celle-ci au stade de l'assemblage du fer, mais dont l'effet bénéfique ne sera produit que lorsque le fer sera utilisé.

Les objets assignés à l'invention sont atteints à l'aide d'un produit actif pour faciliter la vaporisation d'un liquide dans une chambre de vaporisation, ledit produit étant composé d'un agent tensioactif apte à passer en solution dans le liquide destiné à être vaporisé, de manière à réduire sa tension de surface et à améliorer son pouvoir mouillant, au moins lors de la première vaporisation, ledit produit actif étant sous forme solide et associé à un agent effervescent permettant de diffuser ledit agent tensioactif, lorsque le liquide de vaporisation entre en contact avec le produit actif.

Les caractéristiques et avantages de l'invention ressortiront mieux à la lecture de la description donnée ci-après, en référence aux dessins annexés donnés à titre d'exemples non limitatifs dans lesquels:

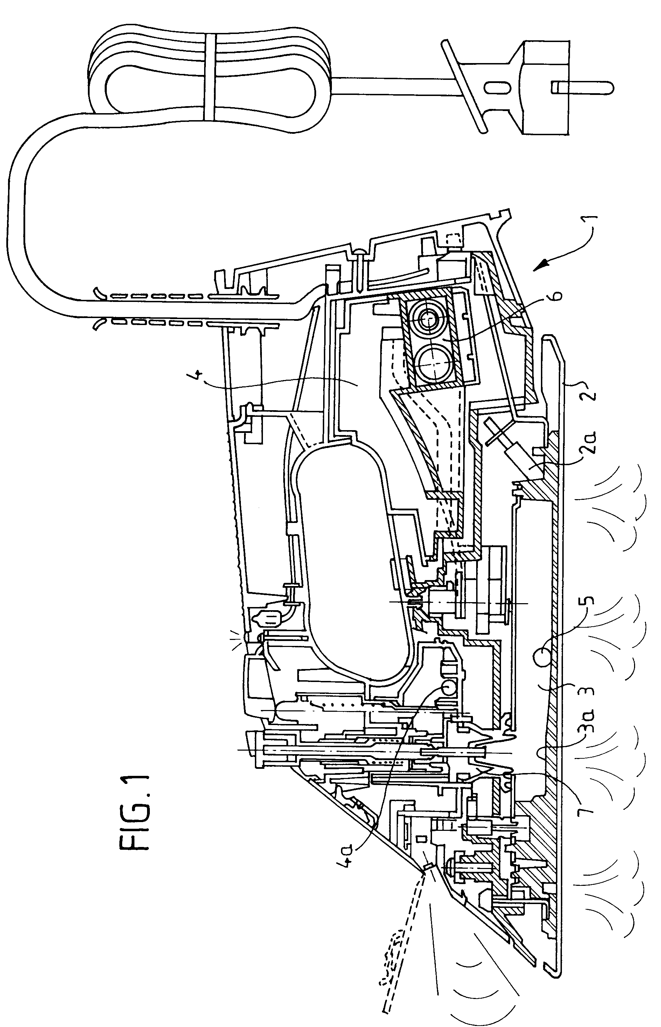

- La figure 1 représente un exemple d'une utilisation d'un produit actif conforme à la présente invention dans un fer à repasser à vapeur.

Dans la description, il sera fait référence, plus particulièrement à un appareil de vaporisation du type fer à repasser à vapeur, mais l'invention ne se limite nullement à ce type particulier d'appareil. Tout appareil destiné à produire de la vapeur peut être concerné par la présente invention, et notamment les générateurs de vapeur.

Le produit actif conforme à l'invention, est destiné à faciliter la vaporisation d'un liquide dans une chambre de vaporisation 3 et permet de réduire la tension de surface du liquide de vaporisation. Ce dernier présente donc un pouvoir mouillant nettement amélioré. La chambre de vaporisation 3 présente de manière classique au moins une surface revêtue d'une couche 3a d'un matériau facilitant l'évaporation d'un liquide lorsque ladite surface est portée à une température suffisante par l'intermédiaire de moyens de chauffe 2a. Les matériaux utilisés doivent être facilement mouillés à chaud pour transférer un maximum d'énergie calorifique vers le liquide répandu sur la couche 3a. Toutes substances hydrophobes captées par la couche 3a ou toutes modifications de structure en surface de la couche 3a sont nuisibles à l'évaporation du liquide de vaporisation et conduisent par exemple au phénomène de caléfaction, en particulier lors de la première utilisation de la chambre de vaporisation 3.

Le produit actif conforme à l'invention, permet de faciliter le mouillage à chaud de la chambre de vaporisation lors de la première utilisation. Le démarrage de la vaporisation est ainsi accéléré même si le dépôt ou le revêtement de vaporisation n'est pas parfait. En outre, le démarrage de la vaporisation est amélioré sans contraindre l'utilisateur à des manipulations excessives.

Le produit actif conforme à l'invention est composé d'un agent tensioactif apte à passer en solution dans le liquide destiné à être vaporisé et se présente sous forme solide, par exemple sous forme de poudre, de dose ou comprimé, etc.... L'agent tensioactif est par ailleurs associé à un agent effervescent pour diffuser ledit agent tensioactif lorsque le liquide de vaporisation entre en contact avec le produit actif. Ce dernier constitue avantageusement un comprimé solide. Le produit actif est en outre associé à un agent effervescent de manière à réaliser un comprimé solide sous forme de pastille effervescente libérant du gaz carbonique, par exemple, à partir d'un acide et d'un carbonate solide mélangés dans des proportions idéales.

De manière générale le produit actif conforme à l'invention est composé d'un agent tensioactif représentant 2 à 10 % du poids total du produit actif, et d'un agent effervescent représentant par conséquent respectivement de 98 à 90 % du poids total du produit actif.

L'agent effervescent est de préférence à base de deux composants respectivement A et B dans lesquels:
- A peut être choisi de manière non limitative parmi le carbonate de soude, ou le bicarbonate de soude ou encore le carbonate de calcium et
- le composant B peut être choisi de manière non limitative parmi un acide faible (tel que de l'acide citrique par exemple) ou parmi un sel acide, tel qu'un tripolyphosphate.

De préférence le composant A représente environ 70 % de l'agent effervescent c'est à dire du poids A + B, le composant B représentant donc environ 30 % de l'agent effervescent, le rapport pondéral entre A et B étant donc respectivement de l'ordre de 70 % / 30 %.

De manière générale le mode de préparation du produit actif conforme à l'invention consiste à assurer, selon une première étape, le mélange du tensioactif avec le composant A, le résultat du mélange étant ensuite additionné au composant B.

A titre d'exemple non limitatif, les compositions suivantes peuvent être utilisées pour réaliser un comprimé de vaporisation conforme à l'invention, ledit comprimé ayant pour chaque exemple un poids moyen de 0,25 grammes:
Première composition
   0,025 g de fluowet PL 80 (tensioactif)
   0,128 g d'acide citrique
   0,097 g de carbonate de sodium
Deuxième composition
   0,01 g de fluowet PL 80 (tensioactif)
   0,072 g de tripolyphosphate de sodium
   0,168 g de bicarbonate de sodium
Troisième composition
   0,0125 g d'arcaflon 25 (tensioactif)
   0,1256 g d'acide oxalique
   0,1119 g de carbonate de sodium

Toutes ces compositions permettent une bonne dispersion du tensioactif dans l'eau et en particulier la première composition.

Dans tous les cas la tension de surface de l'eau est abaissée dans une fourchette inférieure ou égale à 60 DYNES et en particulier dans une fourchette de l'ordre de 30 à 40 DYNES.

Selon une variante de réalisation du produit actif conforme à l'invention, ledit produit actif est composé d'un agent effervescent incluant du peroxyde de sodium. De préférence le produit actif est composé d'un agent effervescent obtenu par une association d'un acide et d'un carbonate de sodium.

L'agent tensioactif permet d'obtenir un liquide de vaporisation dont la tension de surface est inférieure ou égale à 60 DYNES. L'eau présente généralement une tension de surface voisine de 72 DYNES avant une éventuelle diffusion d'un produit tensioactif, lequel permet de réduire ladite tension de surface à une valeur comprise préférentiellement entre 20 et 60 DYNES. Pour une concentration de l'agent tensioactif de l'ordre de 0,01 % dans le volume d'eau total à traiter, la tension de surface obtenue est de l'ordre de 25 DYNES. Les courbes de l'action de l'agent tensioactif sur la tension de surface de l'eau sont spécifiques à chaque tensioactif et bien connues de l'homme de l'art.

Selon une variante supplémentaire de réalisation du produit actif conforme à l'invention, ce dernier peut être constitué d'un revêtement lié à un support de manière à venir en contact avec le liquide de vaporisation. Un tel support, imprégné du produit actif, est par exemple localisé dans le circuit d'écoulement du liquide de vaporisation. Ce support est avantageusement localisé dans la chambre de vaporisation 3.

L'acide citrique et le carbonate de sodium, solides sont mélangés dans des proportions de la réaction, et sont comprimés ensuite pour réaliser une pastille effervescente commode à utiliser. La quantité de produit actif conforme à l'invention, doit permettre de réduire la tension de surface de l'eau pour faciliter le mouillage à chaud de la chambre de vaporisation 3.

La présente invention concerne également un appareil de vaporisation comportant des moyens de chauffe 2a, un réservoir de stockage 4 apte à contenir un liquide de vaporisation 3, une chambre de vaporisation pour évaporer le liquide de vaporisation, des moyens pour transférer le liquide de vaporisation dans la chambre de vaporisation, et des moyens favorisant l'évaporation, constitués par un produit actif conforme à l'invention.

Avantageusement le produit actif est disposé à l'intérieur de la chambre de vaporisation 3. Une telle opération est envisageable lors de l'assemble ou du montage de l'appareil de vaporisation.

Selon une variante de réalisation de l'appareil de vaporisation conforme à l'invention, le produit actif est disposé dans le réservoir de stockage 4. Le produit actif peut ainsi être disposé dans le réservoir de stockage 4 au cours d'une opération d'assemblage de l'appareil de vaporisation, ou par l'utilisateur même lors de la première utilisation et éventuellement au cours d'utilisations ultérieures. Le produit actif sous forme de comprimé solide 5 est particulièrement avantageux à cet effet. L'appareil de vaporisation est avantageusement constitué par un fer à repasser à vapeur 1.

Dans une variante de réalisation, le produit actif conforme à l'invention est utilisé pur ou très faiblement dilué de façon à être manipulable de façon similaire à un liquide à l'état visqueux. Une ou plusieurs gouttes de ce produit actif, représentant sensiblement la quantité nécessaire au traitement du volume d'eau d'un réservoir de stockage 4, sont déposées lors du processus de fabrication d'un fer à repasser à vapeur dans le circuit d'écoulement du liquide de vaporisation, par exemple en amont de la chambre de vaporisation 3. Lorsque le fer à repasser assemblé n'est pas utilisé pendant une longue période, le produit actif déposé sous forme de liquide visqueux, par exemple par l'intermédiaire d'un pinceau ou par une seringue doseuse, se solidifie. Une telle modification de structure du produit actif n'est nullement gênante, étant donné que le produit actif est composé d'un agent effervescent destiné à favoriser la diffusion et la dilution de l'agent tensioactif dans le liquide de vaporisation.

La figure 1 représente un fer à repasser à vapeur associé à un produit actif conforme à l'invention. Le fer à vapeur 1 est constitué d'une semelle 2 et de la chambre de vaporisation 3, laquelle est en contact thermique avec les moyens de chauffe 2a. Le comprimé solide 5 est, par exemple, disposé à l'intérieur de la chambre de vaporisation 3 lors de l'assemblage ou du montage du fer.

Avantageusement le comprimé solide 5 peut également être disposé dans le réservoir de stockage 4 du fer à un emplacement 4a. Le fer à vapeur 1 constitue ainsi un appareil de vaporisation conforme à l'invention. Le produit actif est avantageusement disposé à l'intérieur de la chambre de vaporisation 3 ou à l'intérieur du réservoir de stockage 4. Il est évident que le comprimé solide 5 peut avantageusement être remplacé par un revêtement solide, visqueux ou pâteux déposé, par exemple, au fond du réservoir de stockage 4 ou dans la chambre de vaporisation 3. Le produit actif, sous forme de comprimé solide 5, peut également être, selon une variante de réalisation de l'appareil de vaporisation conforme à l'invention, disposé dans une gorge 7, laquelle est traversée par le liquide de vaporisation avant que ce dernier ne pénètre dans la chambre de vaporisation 3. Le produit actif conforme à l'invention, peut également être disposé dans une cassette déminéralisante 6. La cassette déminéralisante 6 est apte à être placée dans un appareil de vaporisation et à être traversée par le liquide de vaporisation, ladite cassette déminéralisante 6 contenant le produit actif conforme à l'invention. La localisation du produit actif conforme à l'invention, dans la cassette déminéralisante 6 permet d'améliorer la vaporisation lors de chaque remplacement de ladite cassette déminéralisante 6. La figure 1 représente donc un exemple de réalisation d'un ensemble électroménager comportant au moins un appareil de vaporisation et un produit actif destiné à favoriser, au moins la première évaporation d'un liquide de vaporisation, conformément à la présente invention.

Selon une réalisation préférentielle de l'ensemble électroménager conforme à l'invention, le produit actif est un comprimé solide 5 disposé dans la chambre de vaporisation 3.
La présente invention se rapporte également à l'utilisation d'un produit actif conforme à l'invention sous forme de comprimé solide 5 dans un appareil de vaporisation pour améliorer le pouvoir mouillant du liquide de vaporisation. L'utilisation conforme à l'invention, permet d'introduire le comprimé solide 5 dans l'appareil à vaporisation en tant que moyen de rodage avant la première utilisation dudit appareil de vaporisation. Le comprimé solide peut être disposé par l'utilisateur directement dans le réservoir de stockage 4 ou dans la chambre de vaporisation 3 lors de l'assemblage de l'appareil de vaporisation. L'utilisation du produit actif consiste donc à introduire ledit produit actif dans l'appareil de vaporisation dès l'assemblage dudit appareil de vaporisation.

Selon une utilisation préférentielle, le comprimé solide 5 est introduit par l'utilisateur dans le réservoir de stockage 4. L'utilisation d'un revêtement ou d'un dépôt de produit actif à l'intérieur du réservoir de stockage 4 ou de la chambre de vaporisation 3, voire de la cassette déminéralisante 6 est de préférence mise en oeuvre directement lors du montage de l'appareil de vaporisation.

## Revendications

1. Produit actif pour faciliter la vaporisation d'un liquide dans une chambre de vaporisation, ledit produit étant composé d'un agent tensioactif apte à passer en solution dans le liquide destiné à être vaporisé, de manière à réduire sa tension de surface et à améliorer son pouvoir mouillant, au moins lors de la première vaporisation, ledit produit actif étant sous forme solide et associé à un agent effervescent permettant de diffuser ledit agent tensioactif, lorsque le liquide de vaporisation entre en contact avec le produit actif.

2. Produit actif selon la revendication 1, sous forme de dose solide.

3. Produit selon l'une des revendications 1 ou 2, dans lequel la dose solide comprend 2 à 10 % d'un agent tensioactif et 98 à 90 % d'un agent effervescent.

4. Produit actif selon l'une des revendications 1 à 3, dans lequel l'agent effervescent est obtenu par association d'un composant A choisi parmi le carbonate ou bicarbonate de sodium ou le carbonate de calcium et d'un composant B choisi parmi un acide faible ou un sel d'acide.

5. Produit actif selon la revendication 4, dans lequel le composant B est choisi parmi l'acide citrique, l'acide oxalique ou le tripolyphosphate de sodium.

6. Produit actif selon l'une des revendications 4 ou 5, dans lequel le rapport pondéral entre les composants A et B est de l'ordre de 70 % / 30 %.

7. Produit actif selon l'une des revendications 1 à 6 constitué par un comprimé solide (5).

8. Produit actif selon l'une des revendications 1 à 6 constitué par un revêtement lié à un support, de manière à venir en contact avec le liquide de vaporisation.

9. Produit actif selon l'une des revendications 1 à 8 dans lequel l'agent tensioactif permet d'obtenir un liquide de vaporisation dont la tension de surface est sensiblement inférieure ou égale à 60 DYNES et de préférence comprise entre 20 et 40 DYNES.

10. Appareil de vaporisation comportant des moyens de chauffe (2a), un réservoir de stockage (41) apte à contenir un liquide de vaporisation, une chambre de vaporisation (3) pour vaporiser le liquide de vaporisation, des moyens pour transférer le liquide de vaporisation dans la chambre de vaporisation (3), caractérisé en ce qu'il comprend également un produit actif conforme à l'une des revendications 1 à 9.

11. Appareil de vaporisation selon la revendication 10 dans lequel le produit actif est disposé à l'intérieur de la chambre de vaporisation (3).

12. Appareil de vaporisation selon la revendication 10 dans lequel le produit actif est disposé dans le réservoir de stockage (4).

13. Appareil de vaporisation selon l'une des revendications 10 à 12 constitué par un fer à repasser (1) à vapeur.

14. Cassette déminéralisante (6) adaptable à un appareil de vaporisation afin d'être traversée au moins partiellement par le liquide de vaporisation, ladite cassette contenant un produit actif conforme à l'une des revendications 1 à 9.

15. Utilisation d'un produit actif conforme à l'une des revendications 1 à 9, dans un appareil de vaporisation.

16. Utilisation selon la revendication 15 caractérisée en ce qu'elle consiste à introduire au moins une dose dans l'appareil de vaporisation avant l'utilisation dudit appareil de vaporisation.

17. Utilisation selon la revendication 16 caractérisée en ce qu'elle consiste à introduire au moins une dose dans l'appareil de vaporisation en tant que moyen de rodage, avant la première utilisation dudit appareil de vaporisation.

18. Utilisation selon l'une des revendications 15 à 17 caractérisé en ce qu'elle consiste à placer le produit actif dans le circuit d'écoulement du liquide de vaporisation.

19. Utilisation selon l'une des revendications 15 à 18 caractérisé en ce qu'elle consiste à introduire ledit produit actif, dans un appareil de vaporisation, dès l'assemblage dudit appareil de vaporisation.
